# EUROPÄISCHE PATENTSCHRIFT

(11) **EP 1 658 181 B1**
(45) Veröffentlichungstag und Bekanntmachung des Hinweises auf die Patenterteilung: **21.02.2007**
(21) Anmeldenummer: 04728517.6
(22) Anmeldetag: 21.04.2004
(51) Int. Cl.: B60C 15/02, B60C 3/02

(54) **FAHRRADSCHLAUCHREIFEN**
BICYCLE TUBE TYRE
PNEU DE VELO A CHAMBRE A AIR

(30) Priorität: 02.07.2003 DE 10329699
(43) Veröffentlichungstag der Anmeldung: 24.05.2006
(73) Patentinhaber: Continental Aktiengesellschaft, 30165 Hannover (DE)
(72) Erfinder: KLAPP, Wolfgang, 34497 Korbach (DE)
(74) Vertreter: Finger, Karsten
(86) Internationale Anmeldenummer: PCT/EP2004/004187
(87) Internationale Veröffentlichungsnummer: WO 2005/002886

(56) Entgegenhaltungen:
- DE-A- 3 704 087
- DE-C- 356 880
- FR-A- 2 561 994
- GB-A- 833 994
- US-A- 4 249 587

## Beschreibung

Die Erfindung betrifft Fahrradschlauchreifen, aufweisend eine ringförmig geschlossene, schlauchförmige Karkasse, einen Gummilaufstreifen, ein Mittel zur Luftabdichtung und ein Gurtband. Solche Schlauchreifen gemäß dem Oberbegriff des Anspruchs 1 sind u.a. in der GB 833994 oder US4249587 beschrieben.

Unter Schlauchreifen werden solche Luftreifen verstanden, die eine ringförmig geschlossene, schlauchförmige Karkasse haben. Bei Fahrrädern sind solche Reifen vor allem für den Renneinsatz und zugehörige Trainingszwecke vorgesehen. Schlauchreifen besitzen gegenüber Drahtreifen, die mit seitlichen Drahtverstärkungen in Felgenhörnern gehalten werden, leichte Gewichtsvorteile und einen besseren Fahrkomfort.

Die Schlauchreifen weisen in der Regel einen Schlauch aus einer luftundurchlässigen Gummimischung auf, der von der Karkasse umhüllt wird, wobei die Karkasse aus gummiertem Vollgewebe oder zumindest zwei gummierten sich kreuzenden Cordlagen üblicherweise mit einer Naht verschlossen ist. Die Naht kann zu der dem Innenschlauch zugewandten Seite mit einem Innenschutzband z. B. aus Polyamid versehen werden. Zum Schutz vor Felgenanscheuerungen und zum Anbringen des Reifens auf der Felge weist der Schlauchreifen auf der der Felge zugewandten Seite der Naht ein Gurtband, auch Nahtschutzband genannt, auf.

Neben den vorbeschriebenen Schlauchreifen gibt es auch solche, die statt des luftundurchlässigen Innenschlauches eine luftundurchlässige Karkassgummierung aufweisen. Ferner sind Schlauchreifen ohne Naht bekannt.

Die sich bereits beim Aufpumpen fest an die Felge schmiegenden Schlauchreifen (Schrumpfreifen) werden auf der Felge zusätzlich fixiert, um die Kurvenstabilität zu verbessern und im Pannenfall ein Abspringen des Reifens von der Felge zu verhindern.

Für die Fixierung von Schlauchreifen auf Felgen ist es seit langen bekannt, Klebebänder zu verwenden, die in entsprechender Form zwischen Felge und Schlauchreifen angebracht werden. Die Montage mit Hilfe dieser Bänder ist zeitaufwendig, die Klebebänder zeigen ein starke Verschmutzungsempfindlichkeit und eine nachträgliche Korrektur eines versetzt aufgezogenen Reifens ist kaum möglich.

Eine andere Alternative zum Fixieren von Schlauchreifen auf Felgen ist die Verwendung von Schlauchreifenkitt oder -kleber, der auf den Innenbereich der Felge bzw. auf denjenigen Oberflächenteil des Schlauchreifens, der mit der Felge in Berührung kommt, häufig in mehreren Schichten aufgebracht werden muss, wobei häufig für eine dauerhafte Verbindung Aushärtezeiten von ca. 24 h in Kauf genommen werden müssen. Das Ausrichten auf dem langsam aushärtenden Kitt oder Kleber ist schwierig. Werden mit Kitt geklebte Reifen von der Felge gelöst, verbleiben häufig Kittreste auf der Felge, die nur schwer vollständig zu entfernen sind. Schlauchreifenkitt oder -kleber ist in der Regel sehr teuer und die volle Klebkraft bleibt oft nur für eine begrenzte Zeit bestehen.

Aus der DE 37 04 087 A1 ist es ferner bekannt, einen Schlauchreifen mit einem Schlauchband und die Felge mit einem Felgenband zu versehen, wobei die miteinander in Eingriff gelangenden Oberflächen der Bänder zumindest entlang ausgewählter Teilbereiche mit zwischen sich einen Formschluß vorgebenden Oberflächenaufrauhungen oder dergleichen sich formschlüssig ergänzenden Oberflächenstrukturen versehen sind. So soll eine Relativbewegung zwischen Schlauchreifen und Felge weitgehend unmöglich gemacht werden und die Nachteile von Klebeband und Kitt sollen vermieden werden. Vorzugsweise werden an sich bekannte Klettbänder verwendet. Ein Zentrieren des Schlauchreifens ist bei dieser Variante des Fixierens schwer zu erzielen, da der Reifen gleich in der richtigen Position auf das Klettband gebracht werden muss. Ein nachträgliches Verdrehen ist nicht möglich, da der Formschluß dann schon greift.

Außerdem hat diese Variante den Nachteil, dass sowohl zwischen dem Schlauchband und dem Schlauchreifen als auch zwischen dem Felgenband und der Felge dauerhafte Verbindungen geschaffen werden müssen, was aufwändig ist und wobei an zwei Stellen auf ein gute Verbindung geachtet werden muss.

Der Erfindung liegt die Aufgabe zu Grunde, einen Fahrradschlauchreifen bereit zu stellen, der sich einfach und schnell auf der Felge fixieren lässt.

Gelöst wird die Aufgabe gemäß Anspruch 1 dadurch, dass das Gurtband aus einem Gewebe besteht, das (bei montiertem Reifen) zumindest in Reifenumfangsrichtung verlaufende Festigkeitsträger aus einem Material aufweist, welches bei Anfeuchtung mit Wasser oder einer wässrigen Lösung und anschließender Trocknung schrumpft.

Der Grundgedanke der Erfindung ist darin zu sehen, dass die Schrumpfkraft eines speziellen Materials zur Fixierung auf der Felge genutzt wird, wobei dieses Material gleichzeitig in ein üblicherweise am Schlauchreifen vorhandenes Bauteil, nämlich das Gurtband, integriert ist, ohne dass das Gurtband seine Wirkung als Schutz vor Felgenanscheuerungen verliert. Die Nachteile von Klebebändern, Reifenklebern und der Variante mit Klettverschluß, wie die Schmutzempfindlichkeit, die schwierige Ausrichtbarkeit und die Verwendung von zusätzlichem Zubehör, wird vermieden. Für das Fixieren auf der Felge wird das Gurtband einfach mit Wasser oder einer wässrigen Lösung befeuchtet und sofort mit dem Gurtband zum Felgenbett weisend montiert. Nach der Trocknung ist der Reifen durch das geschrumpfte Gurtband fest auf der Felge fixiert.

Das Gewebe für das Gurtband kann in Reifenumfangsrichtung und in axialer Richtung Festigkeitsträger aus dem schrumpfenden Material aufweisen. Es ist aber ausreichend, wenn das Gewebe für das Gurtband Festigkeitsträger (Fasern, Fäden oder Garne) aus dem schrumpfenden Material nur in Reifenumfangsrichtung, bezogen auf den montierten Reifen, aufweist, da die am Umfang angreifenden und in radialer Richtung (konzentrisch) wirkenden Schrumpfkräfte zur Fixierung auf der Felge benötigt werden. Die Festigkeitsträger, die in axialer Richtung verlaufen, können aus einem anderem Material bestehen. So kann beispielsweise ein Gewebe mit Kettfäden aus bei Anfeuchtung und Trocknung schrumpfenden Material und mit Schussfäden aus Baumwolle, Polyester oder Polyamid, ein sogenanntes Hybridgewebe, verwendet werden, wobei die letztgenannten Materialien für die Schussfäden in der Regel preiswerter sind als das schrumpfende Material, so dass sich im Vergleich zu einem Gewebe, welches vollständig aus dem bei Anfeuchtung und Trocknung schrumpfenden Material besteht, Kostenvorteile ergeben können.

Bei den Materialien für die Festigkeitsträger, welche sich bei Anfeuchtung mit Wasser oder einer wässrigen Lösung und anschließender Trocknung, d. h. nach der Entfernung des Wassers, schrumpfen, kann es sich um polymere Materialien handeln, die entlang des Festigkeitsträgers amorph orientierte Bereiche aufweisen, die bei Kontakt mit Wasser in den amorph relaxierten Zustand übergehen, der durch die Trocknung eingefroren wird. Im amorph orientierten Zustand liegen die Polymermoleküle in gestrecktem Zustand vor, während sie im relaxierten Zustand in eine ungeordnetere und gefaltete Struktur übergehen.

Bevorzugt handelt es sich bei dem schrumpfenden Material für die Festigkeitsträger um Polyvinylalkohole, da diese ein besonders gutes Schrumpfverhalten zeigen. Fasern aus Polyvinylalkoholen sind z. B. unter dem Namen Mewlon von der Firma Unitika erhältlich.

Der erfindungsgemäße Fahrradschlauchreifen kann nach herkömmlichen Verfahren, die für den Schlauchreifenbau bekannt sind, hergestellt werden, wobei das Gurtband vorzugsweise mit Hilfe eines unter Wärme oder bei Raumtemperatur vulkanisierfähigen Einstrichs an die Karkasse vulkanisiert ist, um eine gute Trennfestigkeit zwischen Karkasse und Gurtband zu gewährleisten.

Im Folgenden wird die Erfindung anhand eines Ausführungsbeispiels im Zusammenhang mit der nachstehenden Figur näher erläutert, ohne jedoch auf dieses Beispiel beschränkt zu sein.

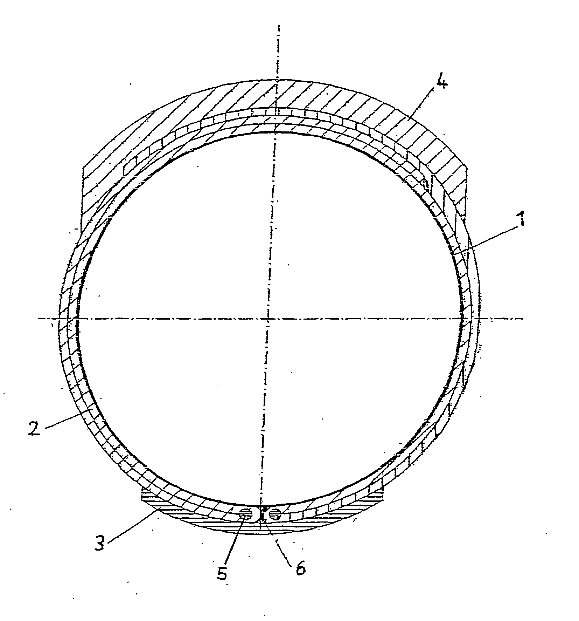

Die einzige Figur zeigt schematisch den Schnitt durch einen erfindungsgemäßen Fahrradschlauchreifen.

Der Fahrradschlauchreifen weist einen luftdichten Innenschlauch 1 und eine diesen Schlauch einschließende Karkasse 2 aus gummiertem Cordgewebe auf, welches um vergrößert dargestellte Baumwollfäden 5 so umgeschlagen wurde, dass dabei zwei sich kreuzende Cordgewebelagen, die unterhalb des Gummilaufstreifens 4 überlappen, entstehen. Die Karkasse 2 wird bei der Herstellung eines solchen Reifens zusammen mit den Laufstreifen 4 als sogenanntes Karkassband vulkanisiert und dann um den bereits vulkanisierten Innenschlauch 1 gelegt und zusammengenäht, wobei die Naht 6 entsteht. Der Reifen weist außerdem ein Gurtband 3 aus einem bei Anfeuchtung und Trocknung schrumpfenden Gewebe, z. B. aus Polyvinylalkohol auf, welches die Naht 6 abdeckt. Das Gurtband 3 kann an dem Schlauchreifen befestigt werden, indem das Gurtband 6 mit einem unter Wärme vulkanisierfähigen Einstrich, z. B. einer benzinischen Gummilösung, mehrfach eingestrichen wird und nach dem Trocknen dieser Schicht das Gurtband 3 mit der bestrichenen Seite, die ein gewisse Grünklebrigkeit aufweist, auf die Karkasse 2 über der Naht 6 aufgelegt wird. Mittels eines Heizringes wird das Gurtband 3 dann an die Karkasse 2 vulkanisiert, wodurch eine gute Trennfestigkeit erzielt wird. Es ist aber auch möglich, dass das Gurtband 3 mit einer sogenannten selbstvulkanisierenden Lösung eingestrichen wird, die bei Raumtemperatur vernetzt und damit eine Anbindung an die Karkasse 2 realisiert wird.

Die Montage des erfindungsgemäßen Schlauchreifens auf der Felge kann wie folgt vorgenommen werden: Die Felge wird zunächst gesäubert. Dann wird das Gurtband 3 beispielsweise mit Hilfe eines Schwammes mit Wasser angefeuchtet und gegebenenfalls wird auch die Felge noch mit Wasser benetzt, um eine für die Schrumpfung ausreichende Wassermenge zur Verfügung zu stellen. Unmittelbar danach wird der Schlauchreifen auf die Felge gebracht. Nach einem leichten Aufpumpen kann der Reifen noch einfach korrekt ausgerichtet werden, da das Material des Gurtbandes 3 noch nicht in der geschrumpften Form getrocknet und damit gehärtet ist. Danach pumpt man den Reifen voll auf und lässt das Gurtband 3 trocknen. Ein auf diese Weise hergestellter Reifen besitzt eine hohe Kurvenstabilität und springt bei einer Panne nicht von der Felge.

### Bezugszeichenliste

### (ist Teil der Beschreibung)

- 1: Innenschlauch
- 2: Karkasse
- 3: Gurtband
- 4: Laufstreifen
- 5: Baumwollfaden
- 6: Naht

## Patentansprüche

1. Fahrradschlauchreifen, aufweisend eine ringförmig geschlossene, schlauchförmige Karkasse (2), einen Gummilaufstreifen (4), ein Mittel zur Luftabdichtung (1) und ein Gurtband (3),
**dadurch gekennzeichnet, dass** das Gurtband (3) aus einem Gewebe besteht, das zumindest in Reifenumfangsrichtung verlaufende Festigkeitsträger aus einem Material aufweist, welches bei Anfeuchtung mit Wasser oder einer wässrigen Lösung und anschließender Trocknung schrumpft.

2. Fahrradschlauchreifen nach Anspruch 1, **dadurch gekennzeichnet, dass** das Gewebe in Reifenumfangsrichtung und in axialer Richtung Festigkeitsträger aus dem schrumpfenden Material aufweist.

3. Fahrradschlauchreifen nach Anspruch 1, **dadurch gekennzeichnet, dass** das Gewebe in Reifenumfangsrichtung Festigkeitsträger aus dem schrumpfenden Material und in axialer Richtung Festigkeitsträger aus Baumwolle, Polyester oder Polyamid aufweist.

4. Fahrradschlauchreifen nach zumindest einem der vorhergehenden Ansprüche, **dadurch gekennzeichnet, dass** das schrumpfende Material ein Polyvinylalkohol ist.

5. Fahrradschlauchreifen nach zumindest einem der vorhergehenden Ansprüche, **dadurch gekennzeichnet, dass** das Gurtband (3) mit Hilfe eines vulkanisierfähigen Einstrichs an die Karkasse (2) vulkanisiert ist.

## Claims

1. Bicycle tube tyre, having an annularly closed, tubular carcass (2), a rubber tread strip (4), an air sealing means (1) and a webbing (3), **characterized in that** the webbing (3) comprises a woven fabric which has reinforcements running at least in the radial direction of the tyre and made of a material which shrinks when dampened with water or an aqueous solution and then dried.

2. Bicycle tube tyre according to Claim 1, **characterized in that** the woven fabric has reinforcements made of the shrinking material in the radial direction of the tyre and in the axial direction.

3. Bicycle tube tyre according to Claim 1, **characterized in that** the woven fabric has reinforcements made of the shrinking material in the radial direction of the tyre and reinforcements made of cotton, polyester or polyamide in the axial direction.

4. Bicycle tube tyre according to at least one of the preceding claims, **characterized in that** the shrinking material is a polyvinyl alcohol.

5. Bicycle tube tyre according to at least one of the preceding claims, **characterized in that** the webbing (3) is vulcanized onto the carcass (2) with the aid of a vulcanizable coating.

## Revendications

1. Bandage pneumatique pour roue de bicyclette, qui présente une carcasse (2) de forme annulaire fermée et en forme de boyau, une bande de roulement (4) en caoutchouc, un moyen (1) de fermeture étanche à l'air et une bande de ceinture (3),
**caractérisé en ce que** la bande de ceinture (3) est constituée d'un tissu qui présente des renforts qui s'étendent au moins dans le sens de la périphérie du bandage et qui sont constitués d'un matériau qui se rétrécit lorsqu'il est séché après avoir été humidifié par de l'eau ou une solution aqueuse.

2. Bandage pneumatique pour roue de bicyclette selon la revendication 1, **caractérisé en ce que** le tissu présente des renforts en matériau rétrécissable orientés dans le sens de la périphérie et dans le sens axial du bandage.

3. Bandage pneumatique pour roue de bicyclette selon la revendication 1, **caractérisé en ce que** le tissu présente des renforts en matériau rétrécissable dans le sens de la périphérie du bandage et des renforts en coton, en polyester ou en polyamide dans le sens axial du bandage.

4. Bandage pneumatique pour roue de bicyclette selon au moins l'une des revendications précédentes, **caractérisé en ce que** le matériau rétrécissable est un alcool polyvinylique.

5. Bandage pneumatique pour roue de bicyclette selon au moins l'une des revendications précédentes, **caractérisé en ce que** la bande de ceinture (3) est vulcanisée sur la carcasse (2) à l'aide d'une couche vulcanisable.
